# EUROPÄISCHE PATENTSCHRIFT

(11) **EP 0 772 514 B1**
(45) Veröffentlichungstag und Bekanntmachung des Hinweises auf die Patenterteilung: **23.12.1998**
(21) Anmeldenummer: 95927720.3
(22) Anmeldetag: 25.07.1995
(51) Int. Cl.: B29C 59/00, C09K 3/18

(54) **SELBSTREINIGENDE OBERFLÄCHEN VON GEGENSTÄNDEN SOWIE VERFAHREN ZUR HERSTELLUNG DERSELBEN**
SELF-CLEANING SURFACES OF OBJECTS AND PROCESS FOR PRODUCING SAME
SURFACES AUTONETTOYANTES D'OBJETS ET LEUR PROCEDE DE PRODUCTION

(30) Priorität: 29.07.1994 DE 4426962
(43) Veröffentlichungstag der Anmeldung: 14.05.1997
(73) Patentinhaber: Barthlott, Wilhelm, 53115 Bonn (DE)
(72) Erfinder: Barthlott, Wilhelm, 53115 Bonn (DE)
(74) Vertreter: Werner, Hans-Karsten, Dr.Dipl.-Chem.
(86) Internationale Anmeldenummer: EP9502934
(87) Internationale Veröffentlichungsnummer: WO9604123

(56) Entgegenhaltungen:
- WO-A-89/00592
- US-A- 3 354 022
- DATABASE WPI Section Ch, Week 8739 Derwent Publications Ltd., London, GB; Class A82, AN 87-274411 & JP,A,62 191 447 ( STANLEY ELEC KK) , 21.August 1987

## Beschreibung

Gegenstand der vorliegenden Erfindung sind selbstreinigende Oberflächen von Gegenständen und Verfahren zur Herstellung derselben, wobei die Selbstreinigung vorzugsweise dadurch erfolgt, daß die Oberflächen von Zeit zu Zeit Regen oder bewegtem Wasser ausgesetzt sind.

Die Reinigung der Oberflächen von Gegenständen hat erhebliche technische und wirtschaftliche Bedeutung, und zwar teilweise aus optischen und ästhetischen Gründen und teilweise aus technischen Gründen, insbesondere wenn es sich um lichtdurchlässige Oberflächen handelt, die zur Erhaltung ihrer Funktion von Zeit zu Zeit gereinigt werden müssen.

Es hat nicht an Versuchen gemangelt, technische Oberflächen zu schaffen, die schmutzabweisend und/oder selbstreinigend sind durch Regen oder bewegtes Wasser. Der Erfolg dieser Bemühungen ist aber relativ gering geblieben, da die Eigenschaften dieser Oberflächen nur relativ kurze Zeit erhalten bleiben. So haben die Hersteller von Polymerfolien oder Polymerplatten versucht, dieses Problem zu lösen, indem sie möglichst glatte Oberflächen erzeugen und diese Oberflächen entweder extrem hydrophob oder extrem hydrophil gemacht haben. Beispiele hierfür sind Oberflächen aus dem extrem hydrophoben Teflon oder die extrem hydrophilen "No drop Beschichtungen", auf denen Wasser und Schmutz tropfenfrei ablaufen kann.

Die CH-PS-26 82 58 beschreibt wasserabstoßende Oberflächen, die mit Wasser einen Kontaktwinkel über 120° aufweisen. Sie werden Gewonnen durch Aufbringen von Pulvern wie Kaolin, Talkum, Ton oder Silikagel auf einer Unterlage, wobei das Pulver zuvor hydrophobiert wird durch organische Siliciumverbindungen. Die Aufbringung erfolgt zusammen mit härtbaren Harzen oder aus Lösungen mit organischen Lösungsmitteln. Dauerhaft hydrophobe Oberflächen sind so nicht herstellbar. Es finden sich auch keine Hinweise auf die Korngrößen oder Korngrößenverteilung der Pulver. Die Eigenschaften der so erhaltenen Oberflächen werden mit denen der Blätter der Kapuzinerkresse verglichen. Bei diesem Vergleich ist zu beachten, daß es dabei weder bekannt war noch technisch analysierbar war, worauf die Eigenschaften der Blattoberfläche von Kapuzinerkresse beruhen. Jetzt durchgeführte Untersuchungen haben ergeben, daß die Kapuzinerkresse eine extrem feine Ultrastruktur aufweist mit Strukturelementen kleiner als 2 µm. Derartige Oberflächenstrukturen sind künstlich kaum herstellbar und darüber hinaus mechanisch extrem empfindlich. Die Kapuzinerkresse ist somit ein denkbar ungeeignetes Modell. Derartige Strukturen sind deshalb auch nicht Gegenstand der vorliegenden Erfindung.

Die US-P-3,354,022 beschreibt eine wasserabstoßende Oberfläche mit Erhöhungen und Vertiefungen und einem Luftgehalt von mindestens 60%, bei der sich ein Oberflächenkontaktwinkel von mehr als 90° einstellt.

Die DE-PS-10 23 217 beschreibt eine Form zum Herstellen von Formkörpern mit rauher Oberfläche. Die Form soll zur Herstellung von Formteilen aus Kautschuk oder Kunststoff mit rauher Oberfläche dienen. Dazu werden die Wandungen der Form überzogen mit grobem Korundpulver und einem Einbrennlack. Die Formen erzeugen Produkte mit gelegentlichen Vertiefungen und daher verbesserten Hafteigenschaften. Es wird sogar die übliche Vulkanisationshaut vermieden. Die so erhaltenen Oberflächen sind beispielsweise gut beschriftbar. Die Produkte sind somit sicherlich nicht mit bewegtem Wasser selbstreinigend.

Die JP-A-62-191447 beschreibt ein Verfahren, um die Wasserabstoßung einer Oberfläche zu erhöhen. Dazu wird ein Plasmapolymerfilm aufgetragen, dieser durch Ätzen angerauht und ein zweiter Plasmapolymerfilm aufgetragen.

Die JP-A-3-174279 (Abstract) beschreibt ein Verfahren zur Herstellung von matten, dekorativen Oberflächen auf Bögen oder Folien. Sie werden hergestellt durch Lacke, die mittels ionisierender Strahlen angehärtet und in welche in nicht spezifizierter Weise nicht näher spezifizierte Muster aufgeprägt werden. Sie werden dann durch weitere Bestrahlung völlig ausgehärtet.

Langjährige Untersuchungen des Anmelders haben ergeben, daß Oberflächen gewisser Pflanzen in der Lage sind, sich durch Regen oder bewegtes Wasser zu reinigen und daß auf derartigen Oberflächen auch keine festen Schmutzpartikel nachhaltig abgelagert werden können. Diese schmutzabweisenden Eigenschaften sind lange Zeit zurückgeführt worden auf verschiedenartige Wachsschichten auf der pflanzlichen Oberfläche. Genauere Untersuchungen haben aber inzwischen ergeben, daß die Fähigkeit zur Selbstreinigung der pflanzlichen Oberflächen weniger von der Art des Wachses als von der Oberflächenstruktur dieser Wachse abhängt. Weitere Untersuchungen haben ergeben, daß die Fähigkeit zur Selbstreinigung in vielen Fällen zerstört werden kann durch den Einsatz von Detergenzien im Wasser, da dies zur Veränderung der Wachspartikel führt.

Die weiteren eingehenden Untersuchungen des Anmelders haben jetzt zu dem überraschenden Ergebnis geführt, daß es technisch möglich ist, die Oberflächen von Gegenständen künstlich selbstreinigend zu machen, indem man sie künstlich mit einer Oberflächenstruktur aus Erhebungen und Vertiefungen versieht, wobei darauf zu achten ist, daß der Abstand zwischen den Erhebungen der Oberflächenstruktur im Bereich von 5 bis 200 µm, vorzugsweise 10 bis 100 µm und die Höhe der Erhebungen im Bereich von 5 bis 100 µm, vorzugsweise 10 bis 50 µm liegen, und wobei darauf zu achten ist, daß diese Erhebungen aus hydrophoben Polymeren oder haltbar hydrophobierten Materialien bestehen und darauf geachtet wird, daß die Erhebungen nicht durch Wasser oder durch Wasser mit Detergenzien ablösbar sind.

Derartige selbstreinigende Oberflächen lassen sich herstellen entweder dadurch, daß die Oberflächenstrukturen bereits bei der Herstellung aus hydrophoben Polymeren geschaffen werden oder erst nachträglich geschaffen werden, und zwar entweder durch nachträgliches Prägen oder Ätzen oder durch Aufkleben eines Pulvers aus den hydrophoben Polymeren. Schließlich ist es möglich, derartige selbstreinigende Oberflächen von Gegenständen zu schaffen durch nachträgliches haltbares Hydrophobieren von zuvor hergestellten Oberflächen mit den gewünschten Strukturen. Eine Möglichkeit zum nachträglichen haltbaren Hydrophobieren ist die nachträgliche Silanisierung von zuvor hergestellten Oberflächen mit den gewünschen Strukturen. Eine Silanisierung kann auf allen Materialien erfolgen, die von Natur aus hydrophil sind, aber in der Lage sind, mit den reaktiven Gruppen der Silane zu reagieren, so daß letztendlich die Oberfläche aus den hydrophoben Resten der Silane besteht.

Technisch besonders bedeutungsvoll sind selbstreinigende Oberflächen von Gegenständen, die lichtdurchlässig sind und die aus optischen, ästhetischen oder technischen Gründen diese Lichtdurchlässigkeit für lange Zeit behalten sollen. Insbesondere handelt es sich dabei um lichtdurchlässige Verglasungen von Gebäuden, Fahrzeugen, Sonnenkollektoren etc.. Von wirtschaftlicher und technischer Bedeutung ist aber auch die Herstellung von selbstreinigenden Oberflächen bei Hausfassaden, Dächern, Denkmälern und Zelten sowie bei Innenbeschichtungen von Silos, Tanks oder Rohrleitungen, die entweder wässrige Lösungen enthalten oder leicht durch bewegtes Wasser rückstandsfrei gereinigt werden können. Von Interesse sind auch die Außenbeschichtungen von Fahrzeugen wie Autos, Zügen oder Flugzeugen. Hierbei ist jedoch zu beachten, daß diese Oberflächen dann bei der Reinigung mit bewegtem Wasser keinen starken mechanischen Beanspruchungen ausgesetzt werden dürfen, da dies zu einem Einebnen oder Polieren der Oberflächenstrukturen führt, so daß diese glänzend werden, aber ihre Fähigkeit zur Selbstreinigung verlieren.

Um die gewünschten Oberflächenstrukturen bereits bei der Herstellung aus hydrophoben Polymeren zu schaffen, können die Gegenstände von vornherein in Formen hergestellt werden, die das Negativ der gewünschten Oberflächenstruktur aufweisen. Weiterhin ist es möglich, die hydrophoben Polymeren in Form von Lösungen und/oder Dispersionen aufzutragen, die beim Antrocknen und Abbinden zu den gewünschten Oberflächenstrukturen führen. Derartige Strukturen entstehen beispielsweise aus selbstorganisierenden Polymeren oder unter Bedingungen, wie sie von der Herstellung von Mattlackoberflächen prinzipiell bekannt sind.

Sofern es nicht möglich oder nicht erwünscht ist, die gewünschten Oberflächenstrukturen von vornherein zu schaffen, kann dies auch nachträglich geschehen, und zwar beispielsweise durch nachträgliches Prägen oder Ätzen. Das Prägen kann beispielsweise durch geheizte oder heizbare Prägestempel erfolgen. Das Ätzen kann erfolgen mit den bekannten Mitteln der chemischen Ätzung oder durch physikalische Methoden wie der Ionenätzung mit Sauerstoff oder anderen Bestrahlungen, die zu einer Aufrauhung der Oberfläche und einer damit erfindungsgemäß brauchbaren Oberflächenstruktur führen.

Weiterhin hat sich gezeigt, daß es auch möglich ist, die gewünschte Oberflächenstruktur zu erhalten durch Aufkleben eines Pulvers aus den hydrophoben Polymeren. Pulver von hydrophoben Polymeren mit der gewünschten Korngröße sind erhältlich. Optimale Ergebnisse werden aber nur erzielt, wenn man Pulver einsetzt mit relativ enger Korngrößenverteilung.

Es war nicht vorherzusehen, daß die erfindungsgemäßen Oberflä-chenstrukturen mit Erhebungen und Vertiefungen bestehend aus hydrophoben Polymeren oder entsprechend nachträglich haltbar hydrophobierte Oberflächenstrukturen in der Lage sind, durch Regen oder bewegtes Wasser rückstandslos gereinigt zu werden. Insbesondere war zu befürchten, daß feste Partikel, die kleiner sind als die Abstände zwischen den Erhebungen, zu einer Belegung der Zwischenräume führen würden und damit die gewünschten selbstreinigenden Eigenschaften vermindert würden. Hier hat sich erwiesen, daß der Selbstreinigungseffekt auch bei Verschmutzung mit so extrem feinen Partikeln, die sich zwischen die Zwischenräume der Oberflächenskulpturen einlagern, perfekt funktioniert: auftreffende Wassertropfen (z.B. Regen) werden im Moment des Auftreffens durch ihre kinetische Energie kurzfristig zwischen die Mikroskulpturen gepresst, und dort festsitzender Schmutz wird herausgerissen und folgend mit dem abrollenden Tropfen abgewaschen.

Weiterhin hat sich gezeigt, daß die erfindungsgemäßen selbstreinigenden Oberflächen durchaus auch mit Wasser mit Detergenzien in Berührung kommen dürfen. Die selbstreinigende Eigenschaft der Oberflächen geht dabei zunächst verloren, wird aber wiedergewonnen, sobald die Detergenzien durch anschließendes Beregnen oder Spülen mit reinem Wasser wieder entfernt sind. Im Gegensatz zu den selbstreinigenden pflanzlichen Oberflächen können somit die Detergenzien keinen nachhaltigen Schaden anrichten. Die selbstreinigende Eigenschaft der Oberflächen kann somit nur durch mechanische Zerstörung der Oberflächenstrukturen zerstört werden. Erfindungsgemäß ist es aber auch dann möglich, die selbstreinigende Wirkung zumindest in gewissem Umfang wieder herzustellen, indem ein geeignetes Pulver aus hydrophoben Polymeren aufgeklebt wird. Die Wasserabstoßung beruht offensichtlich darauf, daß Wassertropfen nur auf den Spitzen der Erhebungen aufliegen und so nur eine äußerst geringe Kontaktfläche mit der Oberfläche besitzen. Zwischen den Wassertropfen und der Oberfläche der Vertiefungen ist jedoch relativ viel Luft eingeschlossen, so daß die Grenzfläche silbrig glänzend erscheint. Da Luft für Wasser ein sehr hydrophober Stoff ist, nimmt der Tropfen die geringstmögliche Oberfläche ein, d.h. er kugelt sich ab und rollt so bei geringster Erschütterung von der Oberfläche ab. In ähnlicher Weise wird auch die Adhäsion von festen Partikeln an der Oberfläche verringert. Unabhängig von ihrer chemischen Natur zeigen sie eine mehr oder weniger große Affinität zu Wassertropfen, so daß sie mit abrollenden Tropfen von der Oberfläche entfernt werden.

Optimale Ergebnisse werden dann erzielt, wenn die Erhebungen der Oberflächenstrukturen dicht genug beisammenstehen, um eine Berührung der zwischen den Erhebungen liegenden Vertiefungen oder Absenkungen durch Wassertropfen zu vermeiden. Liegen die Erhebungen der Oberflächenstrukturen zu eng beieinander oder sind die Vertiefungen nicht tief genug, wirken sie wieder wie eine geschlossene Oberfläche und können dadurch besser benetzt werden. Es sollte daher angestrebt werden, daß mit zunehmendem Abstand der Erhebungen auch die Höhe der Erhebungen vom Untergrund zunehmen sollte. Die bisherigen Messungen haben ergeben, daß innerhalb der beanspruchten Grenzen für den Abstand und die Höhe der Erhebungen gute Ergebnisse erzielt werden. Optimale Ergebnisse liefern Oberflächen mit Erhebungen, die 10 bis 50 µm aufweisen und bei denen der Abstand zwischen den Erhebungen 10 bis 100 µm beträgt. Derartige Oberflächenstrukturen lassen sich jedenfalls überall dort verwenden, wo eine Selbstreinigung durch bewegtes Wasser wie Regen ohne Detergenzien erwünscht ist.

In den nachfolgenden Beispielen sind bevorzugte Ausführungsformen im Labormaßstab beschrieben. Im großtechnischen Maßstab können aber prinzipiell ähnliche Methoden zur Anwendung kommen - auch solche die schon für andere Zwecke und mit anderen Dimensionen zur Veränderung und Gestaltung von Oberflächen zur Anwendung gekommen sind, ohne daß dabei die erfindungsgemäßen Oberflächen mit selbstreinigenden Eigenschaften entstanden sind.

### Beispiel 1

Eine glatte Oberfläche aus Kunststoff wie Resopal oder Polyethylen wird gleichmäßig dünn mit einem Klebstoff wie UHU PLUS® bestrichen und anschließend mit einem Teflonpulver wie Hostaflon® TF 9205 (mittlere Teilchengröße 7 µm) beschichtet. Nach dem Aushärten entsteht eine Oberfläche, von der abgelagerte Partikel wie Ruß und Farbpulver mit Wasser abgespült werden können.

### Beispiel 2

Ein glattes hydrophobes Material wie PTFE wird erhitzt bis es plastisch verformbar ist. Es wird jetzt ein Highmeshsieb aus dem Offsetdruck auf die Oberfläche gedrückt und wieder entfernt.

Nach dem Abkühlen ist eine Oberfläche entstanden mit regelmäßig angeordneten Erhebungen und Vertiefungen vergleichbarer Höhe. Durch Verwendung verschiedener Siebe unterschiedlicher Maschenweite und Dicke des Siebes können die Dimensionen verändert und optimal eingestellt werden. Die Eigenschaften der so erhaltenen Oberflächen sind dann optimal, wenn die Erhebungen abgerundete Spitzen aufweisen. Diese Oberflächenstrukturen sind selbstverständlich auch durch beheizte Prägestücke oder Walzen herstellbar. Entsprechende Folien können auf einen anderen glatten Untergrund aufgeklebt werden.

## Patentansprüche

1. Selbstreinigende Oberflächen von Gegenständen, die eine künstliche Oberflächenstruktur aus Erhebungen und Vertiefungen aufweisen, dadurch gekennzeichnet, daß der Abstand zwischen den Erhebungen im Bereich von 5 bis 200 µm und die Höhe der Erhebungen im Bereich von 5 bis 100 µm liegen und mindestens die Erhebungen aus hydrophoben Polymeren oder haltbar hydrophobierten Materialien bestehen und die Erhebungen nicht durch Wasser oder durch Wasser mit Detergenzien ablösbar sind.

2. Selbstreinigende Oberflächen gemäß Anspruch 1, dadurch gekennzeichnet, daß die Gegenstände lichtdurchlässig sind.

3. Verfahren zur Herstellung von selbstreinigenden Oberflächen gemäß Anspruch 1 oder 2, dadurch gekennzeichnet, daß entweder die Oberflächenstrukturen bereits bei der Herstellung aus hydrophoben Polymeren geschaffen oder nachträglich geschaffen werden, und zwar entweder durch nachträgliches Prägen oder Ätzen oder durch Aufkleben eines Pulvers aus den hydrophoben Polymeren oder durch nachträgliches haltbares Hydrophobieren zuvor hergestellter Oberflächen mit den gewünschten Strukturen.

4. Verwendung von Oberflächen mit einer künstlichen Oberflächenstruktur aus Erhebungen und Vertiefungen, wobei der Abstand zwischen den Erhebungen im Bereich von 5 bis 200 µm und die Höhe der Erhebungen im Bereich von 5 bis 100 µm liegen und mindestens die Erhebungen aus hydrophoben Polymeren oder haltbar hydrophobierten Materialien bestehen und die Erhebungen nicht durch Wasser oder durch Wasser mit Detergenzien ablösbar sind, für Gegenstände, die alleine durch Regen oder bewegtes Wasser gereinigt werden können.

## Claims

1. Self-cleaning surfaces of objects having an artificial surface structure of protrusions and recesses, characterized in that the distance between said protrusions is in the range of from 5 to 200 µm, and the height of said protrusions is in the range of from 5 to 100 µm, and at least the protrusions consist of hydrophobic polymers or permanently hydrophobized materials, and said protrusions cannot be detached by water or water with detergents.

2. The self-cleaning surfaces according to claim 1, characterized in that said objects are transparent.

3. A method for the preparation of self-cleaning surfaces according to claim 1 or 2, characterized in that said surface structures are created either already in the preparation from hydrophobic polymers or afterwards, i.e. either by later embossing or etching, or by adhering a powder of the hydrophobic polymers, or by later permanent hydrophobizing of previously prepared surfaces with the desired structures.

4. Use of surfaces having an artificial surface structure of protrusions and recesses, wherein the distance between said protrusions is in the range of from 5 to 200 µm, and the height of said protrusions is in the range of from 5 to 100 µm, and at least the protrusions consist of hydrophobic polymers or permanently hydrophobized materials, and said protrusions cannot be detached by water or water with detergents, for objects which are capable of being cleaned by rain or moving water alone.

## Revendications

1. Surfaces autonettoyantes d'objets, qui présentent une structure superficielle artificielle formée de bosses et de creux, caractérisées en ce que la distance entre les bosses est comprise dans la plage de 5 à 200 µm, et la hauteur des bosses est comprise dans la plage de 5 à 100 µm, et au moins les bosses sont formées de polymères hydrophobes ou de matériaux rendus hydrophobes de façon durable, et les bosses ne peuvent pas être détachées par l'eau ou par de l'eau avec des détergents.

2. Surfaces autonettoyantes selon la revendication 1, caractérisées en ce que les objets sont transparents.

3. Procédé de fabrication de surfaces autonettoyantes selon la revendication 1 ou 2, caractérisé en ce que les structures superficielles sont produites soit dès la fabrication à partir de polymères hydrophobes, soit postérieurement, à savoir soit par estampage ou par attaque chimique ultérieur, soit par collage d'une poudre formée de polymères hydrophobes ou au moyen d'un traitement hydrophobe durable ultérieur des surfaces préalablement fabriquées avec les structures souhaitées.

4. Utilisation de surfaces ayant une structure superficielle artificielle formée de bosses et de creux, la distance entre les bosses étant comprise dans la plage de 5 à 200 µm, et la hauteur des bosses étant comprise dans la plage de 5 à 100 µm, et au moins les bosses étant formées de polymères hydrophobes ou de matériaux rendus hydrophobes de façon durable, et les bosses ne pouvant pas être détachées par l'eau ou par de l'eau avec des détergents, pour des objets qui peuvent être nettoyés simplement par la pluie ou par de l'eau en mouvement.
